# EUROPÄISCHE PATENTSCHRIFT

(11) **EP 1 917 175 B1**
(45) Veröffentlichungstag und Bekanntmachung des Hinweises auf die Patenterteilung: **22.10.2008**
(21) Anmeldenummer: 06776557.8
(22) Anmeldetag: 02.08.2006
(51) Int. Cl.: B62D 1/16, B62D 15/02

(54) **MANTELROHRSCHALTERMODUL**
TUBULAR JACKET SWITCH MODULE
MODULE COMMUTATEUR POUR TUBE DE PROTECTION

(30) Priorität: 25.08.2005 DE 102005040141
(43) Veröffentlichungstag der Anmeldung: 07.05.2008
(73) Patentinhaber: Daimler AG, 70327 Stuttgart (DE)
(72) Erfinder: HEBENSTREIT, Axel, 70569 Stuttgart (DE); LÖFFLER, Hans-Dieter, 72766 Reutlingen (DE); MAUCH, Markus, 73773 Aichwald (DE)
(86) Internationale Anmeldenummer: PCT/EP2006/007642
(87) Internationale Veröffentlichungsnummer: WO 2007/022857

(56) Entgegenhaltungen:
- EP-A2- 1 069 025
- EP-A2- 1 526 059
- DE-A1- 19 942 818
- DE-B3- 10 259 167

## Beschreibung

Die Erfindung betrifft ein Mantelrohrschaltermodul gemäß dem Oberbegriff des Patentanspruchs 1 sowie eine Lenksäulenanordnung mit einem Mantelrohrschaltermodul gemäß Anspruch

Mantelrohrschaltermodule sind Module, die im Bereich eines Mantelrohrs einer Lenkspindel in einem Kraftfahrzeug angeordnet sind. Diese Module sind derart ausgestaltet, dass sie beispielsweise Lenkstockschalter für Blinker tragen.

Das Mantelrohrschaltermodul ist in aller Regel konzentrisch zum Mantelrohr der Lenkspindel angeordnet und an diesem befestigt. Zum Befestigen eines solchen Mantelrohrschaltermoduls kann eine Zentriereinrichtung wie sie in der DE 102 59 167 A1 beschrieben ist vorgesehen sein.

Das in der DE 102 59 167 A1 beschriebene Mantelrohrschaltermodul ist mit einer Zentriereinrichtung und einem Lager ausgerüstet, wobei sich das Mantelrohrschaltermodul über das Lager auf der Lenkspindel abstützt. Durch Einwirkung einer koaxial zur Längsachse der Lenkspindel gerichteten Kraft, beispielsweise einer mittels Lenkradschraube auf eine Lenkradnabe wirkende Kraft, auf die Zentriereinrichtung wird es ermöglicht, dass das Mantelrohrschaltermodul bei der Montage in axialer Richtung bis in eine Endlage bewegt wird und sich dabei selbsttätig radial ausrichtet. Von Vorteil dabei ist, dass nur ein Verfahrensschritt, nämlich das Aufbringen einer koaxial wirkenden Kraft, ausreicht, um das Schaltermodul an dem Mantelrohr zu befestigen. Gleichzeitig wird durch das Aufbringen der axialen Kraft das Schaltermodul an das Lenkrad gezogen, so dass keine axiale Bewegung zwischen Schaltermodul und Lenkrad erfolgen kann. Hinzu kommt, dass ein Verdrehen oder Verkanten des Schaltermoduls nahezu ausgeschlossen werden kann. Dieser Vorteil ermöglicht u.a. auch eine fehlerfreie Montage eines in das Schaltermodul integrierten Lenkwinkelsensors.

Für verschiedenste Fahrerassistenzsysteme ist es erforderlich, hochauflösende Lenkwinkelsensoren einzusetzen. Hochauflösende Lenkwinkelsensoren liefern jedoch nur dann brauchbare und auswertbare Daten, wenn die Toleranzen zwischen Lenkrad und Lenksäule hinreichend klein gehalten sind. Bei den herkömmlichen Fertigungs- und Montagelösungen, wie beispielsweise in der DE 199 33 049 A1 beschrieben, wird vorgeschlagen, die axiale Toleranzkette zu verkürzen, indem das drehende Teil des Lenkwinkelsensors, hier die Codescheibe, näher an der Lagerung der Lenksäule im Mantelrohr positioniert wird.

Nachteilig an dieser Lösung erweist sich die hohe Teilezahl, die erst im Fahrzeug montiert werden können und damit eine Modulfertigung verhindert. Außerdem lässt der nicht zentrierte Stator gegenüber der Lenksäule und dem Lenkrad verhältnismäßig viele Toleranzen zu, die sich u.a. durch die freie Lagerung der Lenkwinkelsensorik im Modul und durch die indirekte Mitnahme des Lenkwinkelsensorrotors ergeben.

Aufgabe der Erfindung liegt demnach in der Bereitstellung eines Mantelrohrschaltermoduls, das unter Bereitstellung eines hochauflösenden Lenkwinkelsensors kostengünstig herstellbar ist.

Die Aufgabe wird mit den Merkmalen des Patentanspruchs 1 gelöst. Weitere Ausgestaltungen ergeben sich aus den auf Anspruch 1 rückbezogenen Ansprüchen.

Die Erfindung zeichnet sich dadurch aus, dass das Mantelrohrschaltermodul zur Minimierung der axialen und radialen Toleranzkette einen Stator aufweist, der durch eine Zentriereinrichtung bei Einwirkung einer koaxial zur Lenkspindel einwirkenden Kraft radial auf dem Mantelrohr fixiert wird. Auf diesem radial fixierten Stator stützt sich ein vorzugsweise hochauflösender Lenkwinkelsensor ab. Mittels eines Mitnehmers, der durch die Lenkradnabe bewegt wird, wird das rotierende Teil entsprechend des Ausschlags der Lenkradnabe ausgelenkt. Durch die Kombination der Befestigung des Lenkwinkelsensors auf dem Stator des Mantelrohrschaltermoduls und dem Mitnehmer wird der Einfluss der Komponenten der Lenkanlage auf die Genauigkeit des Lenkwinkelsensors entkoppelt. Der Abstand zwischen Mantelrohr und Lenkspindelende kann aufgrund der erfindungsgemäßen Lenkwinkelsensorbefestigung auf dem Stator größer gestaltet werden, ohne die axiale Toleranzkette zu beeinträchtigen.

Vorteilhafte Ausgestaltungen ergeben sich aus den Unteransprüchen.

Anhand der Zeichnung wird im Folgenden eine bevorzugte Ausführungsform der Erfindung beschrieben. Dabei zeigen:
- Fig. 1: eine schematische Darstellung eines Mantelrohrschaltermoduls mit Lenkwinkelsensor,
- Fig. 2: eine Schnittdarstellung eines Mantelrohrschaltermoduls mit Lenkwinkelsensor sowie

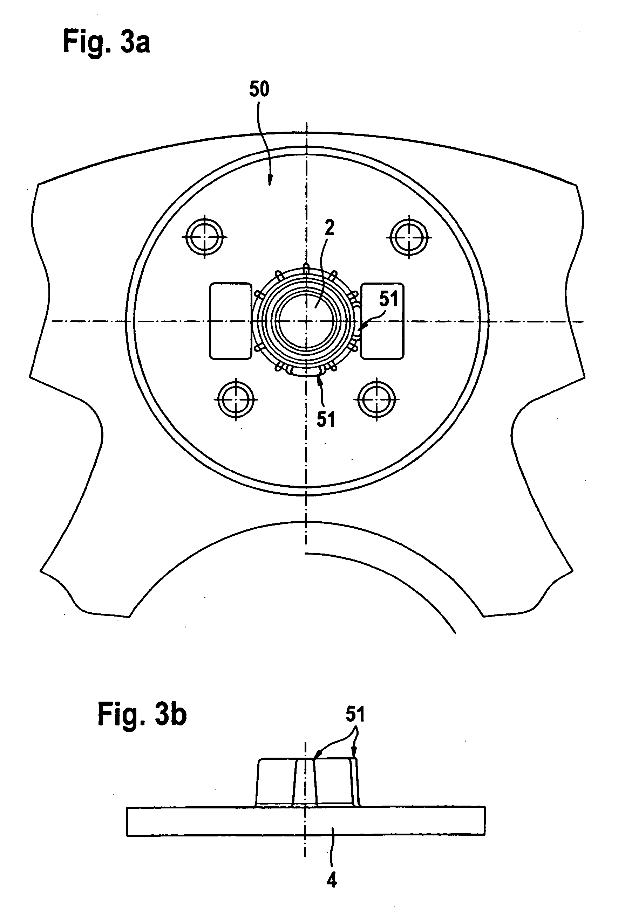

- Fig. 3: eine Draufsicht a) sowie eine Seitenansicht b) einer Lenkradnabe.

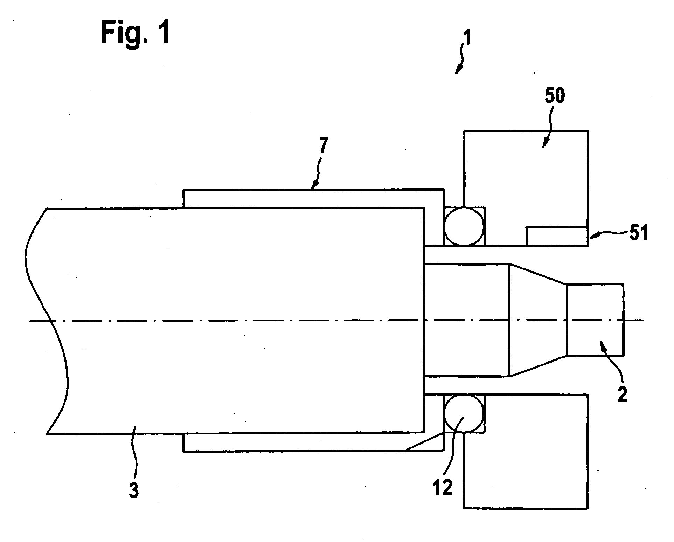

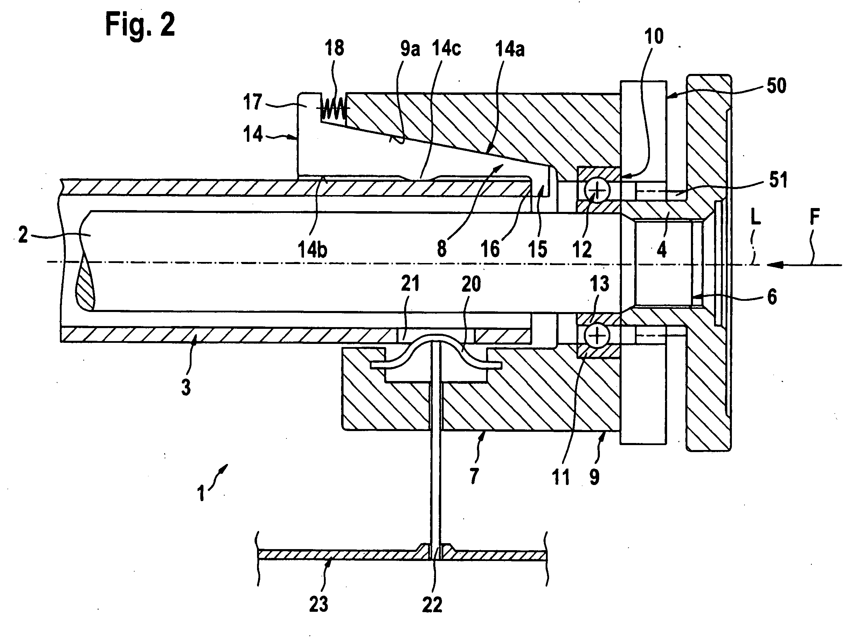

In den Fig. 1 und 2 ist eine Lenksäulenanordnung 1 mit einer Lenkspindel 2 und einem koaxial zur Lenkspindel 2 angeordneten, inneren Mantelrohr 3 in einem Längsschnitt dargestellt. Für eine Komfortverstellung eines Lenkrades, von dem hier nur eine Lenkradnabe 4 dargestellt ist, kann ein äußeres - hier nicht näher dargestelltes - Mantelrohr vorgesehen sein, wobei das äußere Mantelrohr relativbeweglich zum inneren Mantelrohr 3 gelagert ist.

Die Lenkradnabe 4 ist koaxial zur Lenkspindel 2 auf deren, dem Fahrzeuginnenraum zugewandten Ende 6 aufgesteckt. Das Ende 6 der Lenkspindel 2 ist mit einer geraden Außenverzahnung versehen, die in eine korrespondierende Innenverzahnung der Lenkradnabe 4 eingreift, so dass eine Drehbewegung des Lenkrades auf die Lenkspindel 2 übertragen werden kann.

Auf dem inneren Mantelrohr 3 ist ein Schaltermodul 7 befestigt. Das Schaltermodul 7 dient beispielsweise zur Lagerung von Schalthebeln. Dazu ist es notwendig, dass das Schaltermodul 7 gegenüber der Drehbewegung des Lenkrades 4 bzw. der Lenkspindel 2 unbeweglich gehalten ist.

Das Schaltermodul 7 ist in den Fig. 1 und 2 mit seiner Zentriereinrichtung 8 dargestellt. Die Zentriereinrichtung 8 umfasst einen Stator 9, der als Hohlzylinder ausgebildet ist und dessen Innendurchmesser ist auf den Außendurchmesser des inneren Mantelrohrs 3 abgestimmt ist.

An dem zur Lenkradnabe 4 weisenden Ende 10 der Zentriereinrichtung 8 ist ein Außenring 11 eines Axiallagers 12 befestigt, das sich mit seinem Innenring 13 auf der Lenkspindel 2 abstützt, so dass bei drehender Lenkspindel 2 der Stator 9 unbeweglich bleibt.

In dem Stator 9 sind Klemmbacken 14 vorgesehen, die sich über den Umfang des Mantelrohrs 3 verteilen und die mit einem winkelförmigen Auflager 15 an der vorderen Stirnseite 16 des Mantelrohrs 3 anliegen. Die Klemmbacken 14 sind mit einem Ende 17 über Federelemente 18 an dem Stator 9 derart gelagert, dass bei Einwirkung einer axialen Kraft gemäß Pfeil F auf den Stator 9 über die in dem Stator 9 eingelassenen Federelemente 18 die Kraft F in die Klemmbacken 14 eingeleitet wird. Durch das winkelförmige Auflager 15. werden die Klemmbacken 14 gleichmäßig über den Umfang des Mantelrohrs 3 angezogen, so dass eine Zentrierung aller Klemmbacken 14 über den Umfang des Mantelrohrs 3 erfolgt.

Die dem Stator 9 zugewandte Fläche 14a der Klemmbacke 14 verläuft schräg bezüglich der Längsachse L der Lenkspindel 2, so dass der gegenläufig zur Klemmbacke 14 bewegte Stator 9 eine Anlage der Klemmbacke 14 an das Mantelrohr 3 bewirkt. Diese Wirkung wird verstärkt, wenn die Innenfläche 9a des Stators 9 parallel zur schrägen Fläche 14a der Klemmbacke 14 verläuft. An der dem Mantelrohr 3 zugewandten Fläche 14b ist eine Erhebung 14c vorgesehen, die sich - je weiter der Stator 9 gemäß Pfeilrichtung F vorgetrieben wird - durch die Anlage der schrägen Flächen 9a und 14a an das Mantelrohr 3 presst und dadurch eine selbsttätige Zentrierung des gesamten Schaltermoduls 7 bewirkt.

Für eine tangentiale Sicherung des Schaltermoduls 7 ist in der Innenwand 19 des Stators 9 eine Biegefeder 20 befestigt. Korrespondierend dazu ist in dem Mantelrohr 3 eine Aussparung 21 vorgesehen.

Die Biegefeder 20 ist im Mittelbereich konkav ausgebildet, so dass sich die Biegefeder 20 selbsttätig in der Aussparung 21 zentriert, um keine Toleranzen in der radialen Verdrehung des Schaltermoduls 7 zuzulassen. Bei entsprechender Vorspannung der Biegefeder 20 tritt diese immer soweit durch die Aussparung, bis sie mit ihren Flanken an den Rändern der Aussparung 21 anliegt.

An der Unterseite der Biegefeder 20 ist ein Kontrollpin 22 befestigt, der in einer Verkleidung 23 der Lenksäulenanordnung 1 geführt ist. Je nach Position der Biegefeder 20 ragt der Kontrollpin 22 durch die Verkleidung 23 hindurch oder schließt mit der Verkleidung 23 bündig ab, so dass durch haptische Kontrolle die korrekte Lage der Biegefeder 20 in der Aussparung 23 festgestellt werden kann.

Zwischen Lenkradnabe 4 und dem Stator 9 ist ein Lenkwinkelsensor 50 angeordnet. Der Lenkwinkelsensor 50 ist mit seinem feststehenden Teil direkt an den feststehenden Außenring 11 des Lagers 12 angebunden. Das rotierende Teil des Lenkwinkelsensors 50 wird durch einen an der Lenkradnabe 4 angegossenen Mitnahmesteg 51 mitgenommen. Die direkte Anbindung des angegossenen Mitnahmesteges 51 an der Lenkradnabe 4 ermöglicht eine spielfreie Mitnahme des Lenkwinkelsensors 50. Durch die Lagerung des Lenkwinkelsensors, der beispielsweise auf einem optischen oder induktiven Prinzip beruhen kann, auf dem Lager 12 des Stators 9 ergibt sich eine minimale Toleranzkette. Das Lager 12 wird durch die Lenkradnabe 4 fixiert. Somit sind hochauflösende Lenkwinkelsensoren im Mantelrohrschaltermodul realisierbar.

Ein zweiter Mitnahmesteg 51 ist für die Entkopplung weiterer Systeme, beispielsweise der Blinkerrückstellung, notwendig. Somit haben weitere modulinterne Systeme keinen Einfluss auf die Genauigkeit des Lenkwinkelsensors.

## Patentansprüche

1. Mantelrohrschaltermodul, das auf einem Mantelrohr (3) radial und axial festgelegt ist und sich dabei auf einem auf der Lenkspindel (2) angeordnetem Lager (12) abstützt, wobei eine Zentriereinrichtung (8) vorgesehen ist, die bei Einwirkung einer koaxial zur Längsachse der Lenkspindel gerichteten Kraft einen Stator (9) radial auf dem Mantelrohr (3) fixiert,
**dadurch gekennzeichnet, dass**
ein Lenkwinkelsensor (50) vorgesehen ist, dessen feststehendes Teil mit dem statorseitigen Lager (11, 12) verbunden ist, während dessen rotierendes Teil durch die Lenkradnabe (4) mitnehmbar gehalten ist.

2. Mantelrohrschaltermodul nach Anspruch 1,
**dadurch gekennzeichnet, dass**
das das rotierende Teil über einen Mitnehmer (51) an der Lenkradnabe (4) mitnehmbar gehalten ist.

3. Mantelrohrschaltermodul nach Anspruch 1,
**dadurch gekennzeichnet, dass**
das der Mitnehmer (51) einteilig mit der Lenkradnabe (4) ausgebildet ist.

## Claims

1. Tubular casing switch module, which is fixed radially and axially on a tubular casing (3) and is supported by a bearing (12) arranged on the steering-wheel shaft (2), a centring device (8) being provided which fixes a stator (9) radially on the tubular casing (3) under the action of a force directed coaxially with respect to the longitudinal axis of the steering-wheel shaft,
**characterised in that**
a steering angle sensor (50) is provided, whose fixed portion is connected to the bearing (11, 12) on the stator side, whereas its rotating portion is held so that it can move together with the steering-wheel hub (4).

2. Tubular casing switch module according to Claim 1,
**characterised in that**
the rotating portion is held on the steering-wheel hub (4) and can move together with it by virtue of a carrier element (51).

3. Tubular casing switch module according to Claim 1,
**characterised in that**
the carrier element (51) is formed integrally with the steering-wheel hub (4).

## Revendications

1. Module de commutateur pour tube de protection, fixé radialement et axialement sur un tube de protection (3) où il est supporté par un palier (12) disposé contre l'axe de direction (2), un dispositif de centrage (8) étant prévu, lequel bloque radialement un stator (9) contre le tube de protection (3) en cas d'application d'une force dirigée coaxialement à l'axe longitudinal de l'axe de direction, **caractérisé en ce qu'**il est prévu un capteur d'angle de direction (50), dont la partie fixe est raccordée au palier (11, 12) côté stator, alors que sa partie rotative est maintenue de manière à être entraînée par le moyeu du volant de direction (4).

2. Module de commutateur pour tube de protection selon la revendication 1, **caractérisé en ce que** la partie rotative est maintenue de manière à être entraînée par un entraîneur (51) sur le moyeu du volant de direction (4).

3. Module de commutateur pour tube de protection selon la revendication 1, **caractérisé en ce que** l'entraîneur (51) est réalisé d'un seul tenant avec le moyeu du volant de direction (4).
